# EUROPEAN PATENT SPECIFICATION

(11) **EP 3 992 779 B1**
(45) Date of publication and mention of the grant of the patent: **21.06.2023**
(21) Application number: 21202443.4
(22) Date of filing: 13.10.2021
(51) Int. Cl.: G06F 8/60, G06F 16/955, G06Q 10/08, H04L 67/306, H04L 67/00, H04L 67/1097

(54) **METHOD FOR DISSEMINATING SOFTWARE CONTENTS THROUGH A TELECOMMUNICATION NETWORK**
VERFAHREN ZUR VERBREITUNG VON SOFTWARE-INHALTEN ÜBER EIN TELEKOMMUNIKATIONSNETZ
PROCÉDÉ DE DIFFUSION DE CONTENU DE LOGICIEL PAR L'INTERMÉDIAIRE D'UN RÉSEAU DE TÉLÉCOMMUNICATION

(30) Priority: 29.10.2020 IT 202000025714
(43) Date of publication of application: 04.05.2022
(73) Proprietor: Guglielmo S.r.l., 42043 Gattatico (RE) (IT)
(72) Inventor: GUERRI, Giovanni, 42123 REGGIO EMILIA (IT); RICCO', Marcello, 42123 REGGIO EMILIA (IT); IOTTI, Nicola, 42021 GHIARDO DI BIBBIANO (RE) (IT)
(74) Representative: Corradini, Corrado

(56) References cited:
- WO-A1-2013/185329
- US-A1- 2011 246 937
- US-A1- 2016 196 484

## Description

### Technical Field

The present invention relates to a method for disseminating software contents through a telecommunication network following the detection of an identification code by an electronic device.

It must be noted that "telecommunication network" refers to any telecommunication network able to provide access to software contents, preferably the Internet but without excluding other networks such as for instance local networks, private networks and VPN connections.

Similarly, we would like to clarify that "software content" is understood to mean any software element, such as for example data, information, web pages and software procedures.

### State of the art

It is widely known that any software content in the Internet network is made accessible through a respective URL, i.e. a sequence of characters that uniquely identifies the address at which that software content is located on the computer network.

Each of these URLs is therefore an example of what is considered as an identification code of the software content within the context of this discussion.

In order to enable the dissemination of software contents in the Internet network, it is also known to encode the corresponding identification codes, i.e. the corresponding URLs, in a predefined graphic form, for example in the form of a QR code, which can be read by means of a simple camera or other suitable optical device associated to an electronic device.

In this way, the graphical encodings of the identification codes, e.g. QR codes, can be printed, reproduced and generally applied to any physical object, e.g. a billboard, a brochure, a package and much more, allowing anyone who is in possession of an electronic device such as a smartphone to read them and be immediately directed to the corresponding software content.

This software content, e.g. the web page of the person who created or commissioned the QR codes, can be dynamic and change over time through countless tools offered by the web technologies or through the introduction of authentication processes.

Moreover, thanks to the introduction of active code into web pages, it is also possible for a software content associated to a URL to interact with other software procedures in order to perform various actions, such as sending e-mails or upgrading a database.

However, all the modifications and the functionalities that can be added to a software content are under the strict control of the creators and/or the administrators of that software content, e.g. of that web page, whereas the users, i.e. those who only have the identification code, e.g. the URL encoded in the form of a QR code, cannot in any way modify or personalise the software content associated to that identification code.

This approach means that the graphical encodings of the identification codes, such as the aforementioned QR codes, can be used to convey, via the Internet network or other telecommunication networks, a standardised software content to a large number of "passive" users.

On the other hand, it is not currently possible to exploit these identification codes to create a communication system enabling users to convey and/or exchange modifiable and customisable software contents.

The same drawback highlighted with regard to QR codes naturally also occurs with bar codes, with RFID tags and in general with any other way of encoding identification codes that allows them to be incorporated in physical objects and allows them to be read/detected automatically by means of electronic devices.

Prior art document WO 2013/185329 A1, discloses associating interest tags with media items based on social diffusions among users.

### Disclosure of the invention

An object of the present invention is to solve the aforementioned drawback of the prior art, within the context of a simple, rational and relatively low-cost solution.

These and other objects are reached thanks to the characteristics of the invention as set forth in independent claim 1. The dependent claims outline preferred and/or particularly advantageous aspects of the invention which however are not strictly required for the implementation thereof.

In particular, an embodiment of the present invention makes available a method for disseminating software contents through a telecommunication network, comprising the steps of:
- storing in a database a plurality of identification codes singularly associable to a user profile,
- incorporating each identification code in a respective physical object,
- detecting the identification code incorporated in one of these physical objects by means of an electronic device connected to the database by the telecommunication network,
- activating in the database the identification code detected on the physical object, if said identification code is not (yet) associated in the database to any user profile,
   said activation providing to associate in the database the identification code detected on the physical object to a software content and to a user profile provided through the electronic device,
- giving the electronic device access to the software content associated to the identification code detected on the physical object, if said identification code is (already) associated in the database with a user profile,
- allowing to modify the software content associated in the database to each identification code, only through a software application associated to the user profile associated to said identification code.

Thanks to this approach, it is advantageously possible to make public an indefinitely large number of identification codes singularly incorporated in respective physical objects.

The identification codes may initially be "mute", i.e. may not be associated to any software content.

A user who detects one of these identification codes with an electronic device can proceed with the activation thereof, associating it to a user profile and software content.

From that moment on, all the other users who read that identification code with an electronic device will execute the software content configured by the user who performed the activation, who will remain the only person who, through his software application, may possibly modify the software content associated to that specific identification code.

This creates a communication system that allows an indefinite number of "activator" users to convey customised software contents potentially to all users of the telecommunication network, in an extremely simple and dynamic manner.

This approach can be used profitably in a variety of contexts and fields of application.

For example, a particularly interesting field of application could be the one of the anti-loss systems, first aid systems and more generally of the recognition systems.

It is in fact possible to incorporate the identification codes of the present invention in objects suitable for being applied to people, pets or things to be monitored, for example bracelets, clothing or other accessories that can be worn by people, tags suitable for being applied to the collar of the pets, or tags suitable for being fixed on things.

The owners of these objects will be able to activate the identification codes, e.g. by associating them to customisable software contents with their own personal data and/or other relevant information, such as for example the addresses and/or contacts (e.g. telephone number and email address) of any contact persons to contact.

In this way, any other person who subsequently finds a lost pet or object, or encounters a person who is disoriented and confused (e.g. elderly people) or unconscious (e.g. people who have fallen ill), by simply detecting the identification code with his electronic device, will have access to the software content associated thereto and will therefore be immediately made aware of the relevant information to assist the person or to return the pet or object to its legitimate owners.

Thus, one aspect of the invention provides that the software content may comprise data and/or information, for example structured in the form of a web page.

In this way, all data and/or information which the holder of the identification code wishes to communicate to other users of the telecommunication network will be accessible via the electronic device which has detected the identification code.

According to another aspect of the invention, the software content may comprise one or more software procedures, for example in the form of page code of the active web, which are executed automatically when the electronic device is given access to the software content.

These software procedures may comprise, for example, transmitting data and/or information to other selected users of the telecommunication network (e.g. emergency centres, contact persons, etc.), preferably by sending emails, messages and/or notifications.

In some embodiments, this information may also include the geographical location of the electronic device whose software content has been given access to (e.g. the web page).

In other words, the software procedure performed following access to the software content might include the steps of acquiring the geolocation data (e.g. GPS) of the electronic device that performed the access and transmitting this location to the other selected users of the telecommunication network.

According to another aspect of the invention, the software application to modify the software content may be associated to the user profile through an authentication procedure (e.g. username and password).

In this way, it is possible to ensure that the software content associated to a determined identification code can only be modified by the owner of that identification code or an authorised person.

This software application can be a software application residing in an electronic device (e.g. an App) or an application that is accessible from any electronic device through the telecommunication system (e.g. a Web App, a Progressive Web App or a control panel included in a web portal running in the cloud).

Thanks to this solution, the owner of the identification code has several tools available to modify and/or customise the software content associated to the identification code belonging to him.

According to a preferred aspect of the invention, each identification code can be incorporated in the respective physical object by encoding said identification code in graphic form and applying this graphic form on the physical object.

Thereby, the identification code can be detected by a reading performed by means of an optical device associated to the electronic device, keeping the cost of the object highly contained.

In particular, it is preferable that the graphic form of the identification code is that of the QR code.

Thereby, the identification code can be detected by any electronic device provided with a video camera or a camera and a software (presently highly widespread) for decoding QR codes.

It must not however be excluded that, in other embodiments, the identification code can be encoded in other graphic forms, such as for example a bar code, or an RFID tag or any other active, passive or semi-passive element, which can be integrated into a physical object and able to communicate the identification code to an electronic device.

Another preferred aspect of the invention provides that the electronic device performing the detection of the identification code incorporated in the physical object may be a mobile (portable) device connected to the telecommunication network wirelessly, for example a smartphone.

Thanks to this solution, the system is extremely user-friendly, dynamic and flexible.

According to a different aspect of the invention, the software application associated to each user profile may be configured for selectively allowing or preventing access to the software content associated to each identification code associated to said user profile, preferably by means of a suitable command, for example a simple selector, which allows said software content to be blacked out/disabled.

Thereby, the person who activated the identification code, besides modifying the software content, can also choose whether or not another user is allowed, when he detects the identification code incorporated in the physical object, to access the corresponding software content.

This solution is particularly useful when the method is implemented in recognition systems, as the access to the software content can only be enabled in case of real need, for example in the case of loss of a person, a pet or a thing, or when potentially risky activities are carried out (e.g. An intense physical activity), avoiding that in all other cases false alarms can be generated and also avoiding that potentially sensitive information, such as the personal data of the holder of the identification code and of his contacts, can be acquired by simple onlookers or by people with ulterior motives, thus preserving privacy.

Finally, another aspect of the invention provides that the method may comprise the further steps of:
- storing in the database a plurality of activation codes singularly associable to an identification code,
- requiring the input of an activation code through the electronic device, if the identification code detected on the physical object is not (yet) associated in the database to any user profile,
- performing the activation of the identification code detected on the physical object, only if the activation code input through the electronic device is present among those stored in the database and is not (yet) associated to any other identification code,
said activation further providing to associate in the database the identification code detected on the physical object to the activation code input through the electronic device.

This solution is advantageous in that the activation of each identification code requires the user to possess also a separate activation code independent from the first one, which can be used as a security element (or sale evidence) in the framework of a market distribution of the objects incorporating the identification codes.

Without this security element being provided, anyone who succeed in detecting an identification code of an object not yet activated, may activate it and make it no more usable to any other user.

Hence, for instance, if the objects were marketed off-the-shelf, any customer in the shop may activate the identification codes even without purchasing the objects.

Vice versa, with the present solution, the activation code might be provided after purchasing the object, for example the activation code could be provided by the retailer upon payment or could be enclosed in an inaccessible position inside the packet of the object, so that nobody apart from the legitimate purchaser, will be able to activate the corresponding identification code.

This solution has the great advantage of allowing marketing off-the-shelf and/or through retail chains the objects incorporating the identification codes.

In order to simplify and make the system more flexible, each activation code can initially be associable to any one of the identification codes incorporated in the objects, so that it is not necessary to provide each object with a respective unique activation code, but it is sufficient for the retailer to provide the purchaser with an activation code.

After the activation code has been used to activate an identification code, it is however preferable to associate the two codes in an exclusive manner, which is the identification code can be possibly reset (e.g. de-associated from any software content and from any user profile) but can be later re-activated only with the previously used activation code.

In this way, the likelihood of re-using identification codes incorporated in stolen, lost or abandoned objects is avoided.

Another embodiment of the present invention makes available a system for disseminating software contents through a telecommunication network, comprising:
- a database wherein a plurality of identification codes singularly associable to a user profile is stored,
- a plurality of physical objects in each of which a respective one of said identification codes is incorporated,
- a plurality of electronic devices connected to the database by the telecommunication network, each of which is configured to:
   - detect the identification code incorporated in one of the physical objects,
   - activate in the database the identification code detected on the physical object, if said identification code is not (yet) associated in the database to any user profile, said activation providing to associate in the database the identification code detected on the physical object to a software content and to a user profile provided through the electronic device,
   - have access to the software content associated to the identification code detected on the physical object, if said identification code is (already) associated in the database to a user profile,
- at least a software application associable to a user profile and configured to allow to modify only the software content associated in the database to an identification code associated to said user profile.

This embodiment substantially reaches the same advantages of the above outlined method.

Obviously, all the optional aspects already disclosed referring to the method can be applied *mutatis mutandis* also to this corresponding system.

### Brief description of the drawings

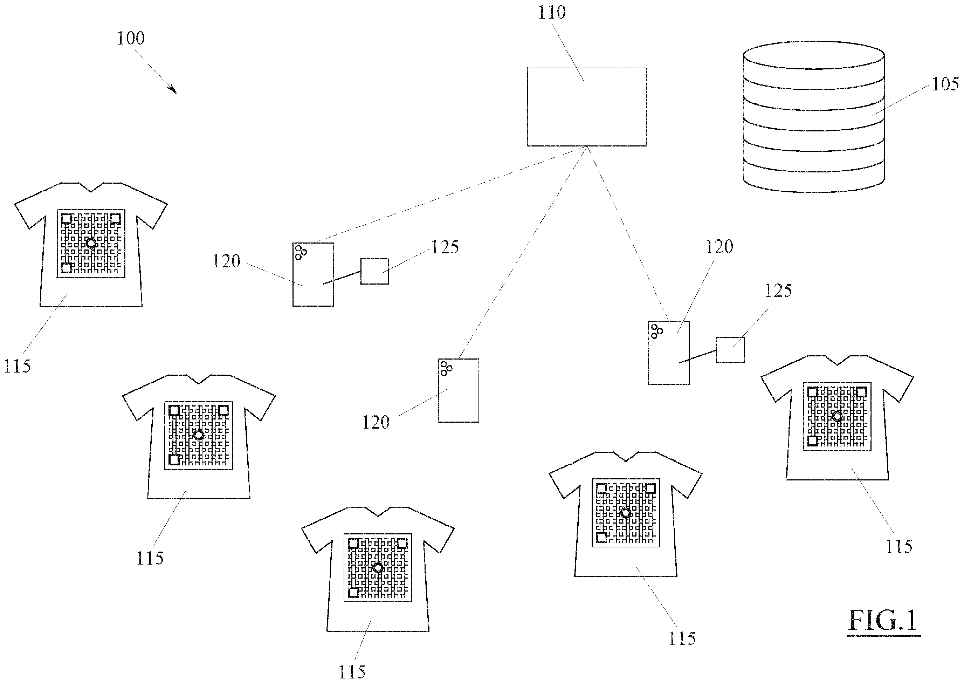

Further characteristics and advantages of the invention will be apparent upon reading the hereinafter description provided for exemplary and non-limiting purposes, with the aid of figure 1 shown in the enclosed table, which shows a diagram of a system for disseminating software contents according to an embodiment of the present invention.

### Detailed description

The above figures show a system 100 for disseminating software contents through a telecommunication network.

By telecommunication network it is preferably meant the Internet, but it is not excluded that, in other embodiments, it may be any other telecommunication network able to give access to software contents, including local, private networks and VPN connections.

It should also be pointed out that the term "software content" means any software element or set of software elements, such as for example data and/or information (typically in digital format), web pages and software procedures.

The system 100 comprises a database 105, which is connected to the telecommunication network and wherein at least a plurality of identification codes are stored.

Each identification code may be a sequence of characters, for instance an URL, identifying univocally the address at which a software content is in the computer network.

Initially, these identification codes are not associated in the database 105 to any user profile and to any software content.

In addition to identification codes, also a plurality of activation codes can be stored in the database 105.

Each activation code can be a simple univocal sequence of characters, for instance alpha-numerical, generated so that each activation code is different from all the other ones.

Initially, the activation codes are not associated in the database 105 to any identification code.

The database 105 can be managed by a software application 110, which will be hereinafter called "central platform", which can be executed on physical servers, virtual machines or in the cloud.

The central platform 110 may comprise a first software procedure generating and storing in the database 105 the identification codes and a second software procedure which, independently from the first one, generates and stores in the database 105 the activation codes.

After generation and storage in the database 105, each identification code can be incorporated in a respective physical object 115.

This incorporation can for instance occur encoding each identification code in a predefined graphic form, e.g. in a corresponding QR code, and applying this QR code to the respective object, for instance by etching, direct printing on the object, printing on a support which is then fixed to the object or in any other way.

It must not however be excluded that, in other embodiments, the identification codes can be encoded in other graphic forms, such as for example in a bar code, or an RFID tag or any other active, passive or semi-passive element, which can be integrated into a physical object and able to communicate the identification code to an electronic device.

The system 100 thus comprises a plurality of electronic devices 120 adapted to detect the identification codes incorporated in the physical objects 115, for instance to read the URL encoded in each QR code.

These electronic devices 120 are preferably (portable) mobile devices, for instance smartphones, belonging to the system 100 users and connected to the telecommunication network by means of a wireless connection of any type.

QR codes may be read by means of a video camera/camera installed in each of these electronic devices 120 and by means of any software application which, executed singularly on the electronic devices 120, allows them to decode the QR code framed by the video camera/camera.

In general, these software applications are already present on the smartphones and are connected to an Internet Browser, also installed on each smartphone, which is able to send an access request to the URL decoded by the QR code.

The physical objects 115 wherein the identification codes are incorporated, for instance encoded as QR code, may be distributed publicly to a wide range of potential users, for instance sold off-the-shelf through a retail network.

By contrast, activation codes may initially stay secret or in any case be available only to the system 100 managers or administrators.

When a user comes into possession of an object 115, for instance by purchasing it, he can also receive an activation code.

For instance, the activation codes may be printed singularly, in their original shape, on a card that is kept by retailers and given to the user only upon the purchase of the object 115, or which is inserted into a hidden and non-accessible position inside the package containing the object 115.

At this point, the user can read the QR code on the object 115 using his own electronic device 120.

After reading the QR code, the electronic device 120 (for instance by the Internet Browser) will be able to send to the central platform 110, through the telecommunication network, an access request to the software content associated to the identification code, for instance the URL, encoded in the QR code.

The central platform 110 therefore verifies if the identification code is already associated in the database 105 to a user profile.

If the identification code is not associated to any user profile, as occurs in case the physical object 115 is "new" and the relative identification code has never been activated, the central platform 110 can send to the electronic device 120 the request to provide an activation code.

Through the electronic device 120, the user will be able to input the activation code he has and send it to the central platform 110.

The central platform 110 verifies that the activation code input by the electronic device 120 is present in the database 105 and that has not yet been associated to any identification code.

If both of these conditions are fulfilled, the central platform 110 performs the activation in the database 105 of the identification code which was read on the physical object 115 by the electronic device 120.

This activation procedure may first comprise the step of associating in the database 105 the aforesaid identification code to the activation code input through the electronic device 120.

The activation procedure may then comprise the step of associating in the database 105 the aforesaid identification code to a user profile.

This step may provide that the central platform 110 requires the user, through the electronic device 120, to create a new user profile, by selecting at the same time corresponding access credentials (e.g. username and password), or in alternative to indicate an already existing user profile, inputting the corresponding access credentials already stored.

Once performed these operations, the central platform 110 associates the identification code read on the physical object 115 to the new user profile or to the user profile indicated through the authentication procedure.

At this point, the activation procedure may include the step of associating in the database 105 the aforesaid identification code to a respective software content, e.g. to a respective web page.

This software content may be created, or simply modified or customised, upon activation of the identification code, directly through the electronic device 120.

Once the activation procedure has been completed, a unique correlation is thus created in the database 105 between the identification code, the corresponding software content, the user profile who activated it and the activation code used to perform the activation.

Subsequently, any electronic device 120 that performs a second reading of the QR code present on a physical object 115 that has already been "activated", will send to the central platform 110, via the telecommunication network, a request for access to the software content associated to the identification code, e.g. the URL, encoded in the QR code.

The central platform 110, by verifying in the database 105 that the identification code is already associated to a user profile, may give the aforesaid electronic device 120 access to the software content associated to the user code read on the physical object 115.

In this way, the user who carried out this second reading will be able to use the software content created/modified/customised by the user who first carried out the activation of the identification code and who is therefore the legitimate owner of the physical object 115 in which said identification code is incorporated.

For example, the user who performed the second reading may receive data and/or information on his device and/or cause the execution of the software procedures prepared by the holder of the identification code and which form the corresponding software content.

Said software procedures can be both specific to the software of the central platform 110 and calls to APIs (Application Programming Interface) of external and third-party software.

In order to modify the software content associated with an identification code that has already been activated, the system 100 then comprises a software application 125, hereinafter called "user application", that interfaces with the central platform 110 and that can be associated to a user profile through an authentication mechanism.

In particular, when this user application 125 is executed, it may require inputting access credentials (e.g. username and password).

These access credentials are transmitted to the central platform 110 which verifies whether they correspond or not to those stored for one of the registered user profiles.

If no correspondence is detected, the central platform 110 denies access to the database 105 to the user application 125.

If vice versa there is a correspondence between the access credentials input and one of the registered user profiles, the central platform 110 allows the user application 125 to modify the software content associated exclusively to the identification codes associated to that user profile.

This user application 125 may be a local application (App) running on the electronic device 120 of the user who performed the identification code activation, e.g. a mobile application installed on the smartphone.

In alternative, the user application 125 can be a remote application accessible from any electronic device through the telecommunication system (e.g. a Web App, a Progressive Web App or a control panel included in a web portal running in the cloud) and which is associated to the user profile through the same authentication mechanism previously outlined.

Thereby, users can modify the software content associated to their own identification codes from any device connected to the telecommunication network.

In some embodiments, the system 100 can comprise both a local application to be installed directly on the electronic devices 120 and a remote application, so as to provide the users with more alternatives to modify their software contents.

As mentioned above, the software content associated to each identification code may comprise, for example, a web page on which data and/or information may be contained. This web page may also comprise active codes that enable the automatic or discretionary execution of one or more software procedures, such as the transmission of information to selected users of the telecommunication network, preferably by sending emails, messages and/or notifications.

Through the user application 125, the registered user can, for example, modify the data and/or information on the web page associated to his identification code, and possibly one or more of the settings of the software procedures, e.g. the names, addresses and telephone numbers of the other users to whom the information is to be sent.

If needed, the user application 125 can comprise a reset command which allows to send to the central platform 110 the request of resetting one of the identification codes associated to the user profile associated to the user application 125.

On receipt of this request, the central platform 110 disassociates in the database 105 said identification code from the respective software content and from the user profile, so that the identification code can be possibly used by another person.

However, the central platform 110 preferably maintains the association between the identification code and the respective activation code, so that said identification code can be reactivated only with the activated code used the first time.

The user application 125 can also comprise a command, for instance a simple selector, which allows to black out/disable the software content associated to one of the identification codes associated to the user profile associated to the user application 125.

More precisely, actuating this command allows to command the central platform 110 in order to prevent any electronic device 120 from accessing to the software content associated to said identification code, even if said electronic device 120 performs the reading of the corresponding QR code on the physical object 115.

In this way, the owner of the identification code can prevent unwanted accesses to his software content.

Obviously, the disabling command present in the user application 125 is reversible, enabling the owner of the identification code to disable and enable again (i.e. make accessible again) the corresponding software content indefinitely.

The system 110 described so far can be used in many applications, of which three characteristic examples are given below.

### Example 1

In this first example, the system 100 is used as a recognition system to provide assistance to people in difficulty, e.g. disoriented or unconscious.

The example involves marketing a plurality of T-shirts, on each of which a QR code is printed which represents a different identification code for each T-shirt.

Initially, the identification codes are all deactivated and are not associated to any user profile.

When someone buys the T-shirt, he is also given an activation code, which is created completely independently and not associated to the identification code.

The activation code allows the purchaser to activate the identification code, according to the methods outlined above, by associating it to a user profile and to a software content. In particular, the purchaser may configure the software content so as to include therein personal data (e.g. name, age, address) and possibly health information of the person wearing the T-shirt, as well as possibly personal data (e.g. names, telephone numbers, email addresses) of other persons to be contacted in case of emergency.

At this point, the QR code is associated to the software contents entered and to the user profile of its holder.

From now on, the person to be monitored may wear the T-shirt during a sporting activity or any other potentially dangerous activity.

If, during this activity, the person falls ill and is knocked unconscious, anyone who encounters him can read the QR code printed on the T-shirt with his own electronic device 120, typically with his smartphone, and thus automatically and immediately have access to the personal data of the unfortunate person as well as to his emergency contacts.

Reading the QR code can also automatically activate other software procedures, such as that of commanding the central platform 110 to send an alarm message to the emergency contacts, for example in the form of a notification or an email.

This alarm message may also contain some specific information, such as for example the geographical location of the electronic device 120 of the rescuer who read the QR code.

To this end, the software procedure carried out following the reading of the QR code could comprise the steps of acquiring the geolocation data (e.g. GPS) of the electronic device 120 that carried out the reading and of including this information in the alarm message, for example by representing it in graphic form on a map.

In other circumstances, through the appropriate command in the user application 125, the owner of the T-shirt can disable the software content associated to his identification code, so as to black out the personal data to any other user reading the QR code and prevent the execution of related software procedures, including the sending of alarm messages.

This function serves to limit false alarms and preserve privacy by allowing the user to have complete control over the display of his personal data.

For example, if the T-shirt is worn in a crowded bus, the user can prevent anyone from sending alarm messages or viewing his personal data just by framing the code on the T-shirt.

The main advantage of this approach over other similar systems already on the market is that the identification codes are generated independently of the software content and can be made public and accessible on T-shirts on the shop shelves.

Known solutions involve in fact the registration by the user on an online platform, where personal data and other information can be uploaded, after which the platform incorporates this data and/or information into a software content and generates the corresponding identification code, or the T-shirt with the identification code, which is sent to the user.

However, this way of operating prevents the possibility of selling the T-shirts off-shelf and makes the production of T-shirts with the identification code considerably more complicated.

Moreover, since no control by the user is provided over whether or not the software content is accessible, the user's personal data remain visible at all times, to the serious detriment of privacy.

Of course, although in example 1 it is provided for the identification codes to be applied to the T-shirts, they could be applied likewise to other clothing or accessories, e.g. on bracelets, watches or clips to be attached to them.

### Example 2

In this second example, the system 100 is used as an anti-loss system for suitcases.

The example involves marketing a plurality of suitcases, on each of which a QR code is printed which represents a different identification code for each suitcase.

Initially, the identification codes are all deactivated and are not associated to any user profile.

When someone buys the suitcase, he is also given an activation code, which is created completely independently and not associated to the identification code.

The activation code allows the purchaser to activate the identification code, according to the methods outlined above, by associating it to a user profile and to a software content. In particular, the purchaser may configure the software content so as to include his personal data (e.g. name, address) and possibly his contact details (e.g. telephone number, email address).

At this point, the QR code is associated to the software contents entered and to the user profile of its holder.

From now on, the person can use the suitcase normally.

If the suitcase is lost, anyone who finds it can read with his own electronic device 120, typically a smartphone, the QR code printed on the suitcase, thereby automatically and immediately gaining access to the personal data of its owner.

In this case too, reading the QR code can also automatically trigger other software procedures, e.g. that of commanding the central platform 110 to send a message to the legitimate owner, for example in the form of a notification or an email.

This message may also contain some specific information, such as the geographical location of the electronic device 120 that read the QR code.

To this end, the software procedure carried out following the reading of the QR code could comprise the steps of acquiring the geolocation data (e.g. GPS) of the electronic device 120 that carried out the reading and of including this information in the message, for example by representing it in graphic form on a map.

In all other circumstances, i.e. when the suitcase has not been lost, through the appropriate command in the user application 125, the owner can disable the software content associated to the identification code, so as to black out his personal data to any other user reading the QR code and preventing the execution of related software procedures, including the sending of messages.

Again, the main advantage of this approach over other similar systems already on the market is the fact that the suitcases can be sold off-shelf and the personal data of the owners can be preserved.

The known solutions provide for the possibility of creating an identification code only after the user has registered and entered his data, and do not allow the selective disabling of third-party accessibility to the software content associated to the identification code. Of course, although in example 2 it is provided for the identification codes to be applied to the suitcases, they could be applied likewise to any other object to be traced, e.g. bicycles, key rings or document holders.

### Example 3

In this third example, the system 100 is used as an anti-loss system for pets.

The example involves marketing a plurality of tags, on each of which a QR code is printed which represents a different identification code for each tag.

Initially, the identification codes are all deactivated and are not associated to any user profile.

When someone buys the tag, he is also given an activation code, which is created completely independently and not associated to the identification code.

The activation code allows the purchaser to activate the identification code, according to the methods outlined above, by associating it to a user profile and to a software content. In particular, the purchaser will be able to configure the software content to include the pet's identification data (e.g. the identification number associated to the pet's microchip) and the personal data (e.g. name, telephone number, email address) of the pet's owner or other relevant persons (e.g. the veterinary).

At this point, the QR code is associated to the software contents entered and to the user profile of its holder.

From now on, the tag can be applied to the pet's collar.

If the pet is lost, anyone who finds it can read with his own electronic device 120, typically a smartphone, the QR code printed on the tag, thereby automatically and immediately gaining access to the pet's data, as well as those of its owner or of other contact persons.

In this case too, reading the QR code can also automatically activate other software procedures, e.g. that of commanding the central platform 110 to send a message to the owner and/or other relevant people, for example in the form of a notification or an email. This message may also contain some specific information, such as the geographical location of the electronic device 120 of the rescuer who found the pet and who read the QR code.

To this end, the software procedure carried out following the reading of the QR code could comprise the steps of acquiring the geolocation data (e.g. GPS) of the electronic device 120 that carried out the reading and of including this information in the message, for example by representing it in graphic form on a map.

In all other circumstances, i.e. when the pet has not been lost, the owner of the tag can disable the software content associated to the identification code, so as to black out his personal data to any other user reading the QR code and preventing the execution of related software procedures, including sending messages.

Again, the main advantage of this approach over other similar systems already on the market is the fact that the tags can be sold off-shelf and the personal data of the owners can be preserved, respecting their privacy.

The known solutions provide for the possibility of creating an identification code only after the user has registered and entered his data, and do not allow the selective disabling of third-party accessibility to the software content associated to the identification code.

Of course, although example 3 provides for the identification codes to be applied to the tags, they could be likewise applied to pet clothing or other accessories.

Obviously, an expert in the field may make several technical-applicative modifications to the invention described above, without departing from the scope of the invention as hereinbelow claimed.

## Claims

1. A method for disseminating software contents through a telecommunication network, comprising the steps of:
- storing in a database (105) a plurality of identification codes singularly associable to a user profile,
- incorporating each identification code in a respective physical object (115),
- detecting the identification code incorporated in one of these physical objects (115) by means of an electronic device (120) connected to the database (105) by the telecommunication network,
- activating in the database (105) the identification code detected on the physical object (115), if said identification code is not associated in the database (105) to any user profile,
said activation providing to associate in the database (105) the identification code detected on the physical object (115) to a software content and to a user profile provided through the electronic device (120),
- giving the electronic device (120) access to the software content associated to the identification code detected on the physical object (115), if said identification code is associated in the database (105) to a user profile,
- allowing to modify the software content associated in the database (105) to each identification code, only through a software application (125) associated to the user profile associated to said identification code.

2. A method according to claim 1, comprising the further steps of:
- storing in the database a plurality of activation codes singularly associable to an identification code,
- requiring the input of an activation code through the electronic device (120), if the identification code detected on the physical object (115) is not associated in the database (105) to any user profile,
- performing the activation of the identification code detected on the physical object (115), only if the activation code input through the electronic device (120) is present among those stored in the database (105) and is not associated to any identification code,
said activation further providing to associate in the database (105) the identification code detected on the physical object (115) to the activation code input through the electronic device (120).

3. A method according to claim 1, wherein the software application (125) associated to each user profile is configured for selectively allowing or preventing access to the software content associated to each identification code associated to said user profile.

4. A method according to claim 1, wherein each identification code is incorporated in the respective physical object (115) by encoding the identification code in a graphic form and applying this graphic form on the physical object (115).

5. A method according to claim 4, wherein the graphic form of the identification code is a QR code.

6. A method according to claim 1, wherein the electronic device (120) is a mobile device connected to the telecommunication network.

7. A method according to claim 6, wherein the electronic device is a smartphone.

8. A method according to claim 1, wherein the software application is associated to the user profile through an authentication procedure.

9. A method according to claim 1, wherein the software application is residing in an electronic device (120) or is accessible through the telecommunication system.

10. A method according to claim 1, wherein the software content comprises data and/or information.

11. A method according to claim 1, wherein the software content includes one or more software procedures which are automatically executed when the electronic device (120) is given access to the software content.

12. A method according to claim 11, wherein said software procedures comprise transmitting information to other telecommunication network users.

13. A method according to claim 12, wherein said information includes the geographical location of the electronic device (120) whose software content has been given access to.

14. A system (100) for disseminating software contents through a telecommunication network comprising:
- a database (105) wherein a plurality of identification codes singularly associable to a user profile is stored,
- a plurality of physical objects (115) in each of which a respective one of said identification codes is incorporated,
- a plurality of electronic devices (120) connected to the database by the telecommunication network, each of which is configured to:
- detect the identification code incorporated in one of the physical objects (115),
- activate in the database the identification code detected on the physical object (115), if said identification code is not associated in the database (105) to any user profile, said activation providing to associate in the database (105) the identification code detected on the physical object (115) to a software content and to a user profile provided through the electronic device (120),
- have access to the software content associated to the identification code detected on the physical object (115), if said identification code is associated in the database (105) to a user profile,
- at least a software application (125) associable to a user profile and configured to allow modifying only the software content associated in the database (105) to an identification code associated to said user profile.

## Patentansprüche

1. Verfahren zum Verteilen von Software-Inhalten mittels eines Telekommunikationsnetzes, folgende Schritte umfassend:
- Speichern mehrerer Identifizierungscodes, die einzeln einem Benutzerprofil zugeordnet werden können, in einer Datenbank (105),
- Einbinden jedes Identifizierungscodes in ein entsprechendes physisches Objekt (115),
- Erkennen des Identifizierungscodes, der in eines dieser physischen Objekte (115) eingebunden ist, mittels eines elektronischen Geräts (120), das durch das Telekommunikationsnetz mit der Datenbank (105) verbunden ist,
- Aktivieren des an dem physischen Objekt (115) erkannten Identifizierungscodes in der Datenbank (105), wenn der Identifizierungscode in der Datenbank (105) keinem Benutzerprofil zugeordnet ist,
wobei das Aktivieren dafür sorgt, dass der an dem physischen Objekt (115) erkannte Identifizierungscode in der Datenbank (105) einem Software-Inhalt und einem Benutzerprofil, das mittels des elektronischen Geräts (120) bereitgestellt wird, zugeordnet wird,
- Gewähren des Zugriffs des elektronischen Geräts (120) auf den Software-Inhalt, der dem an dem physischen Objekt (115) erkannten Identifizierungscode zugeordnet wurde, wenn der Identifizierungscode in der Datenbank (105) einem Benutzerprofil zugeordnet ist,
- Ermöglichen des Modifizierens des Software-Inhalts, der in der Datenbank (105) jedem Identifizierungscode zugeordnet ist, nur mittels einer Software-Anwendung (125), die dem Benutzerprofil zugeordnet ist, das dem Identifizierungscode zugeordnet ist.

2. Verfahren nach Anspruch 1, ferner die folgenden Schritte umfassend:
- Speichern mehrerer Aktivierungscodes, die einzeln einem Identifizierungscode zugeordnet werden können, in der Datenbank,
- Fordern der Eingabe eines Aktivierungscodes mittels des elektronischen Geräts (120), wenn der an dem physischen Objekt (115) erkannte Identifizierungscode in der Datenbank (105) keinem Benutzerprofil zugeordnet ist,
- Durchführen der Aktivierung des an dem physischen Objekt (115) erkannten Identifizierungscodes nur dann, wenn der mittels des elektronischen Geräts (120) eingegebene Aktivierungscode unter den in der Datenbank (105) gespeicherten Aktivierungscodes vorhanden und keinem Identifizierungscode zugeordnet ist,
wobei das Aktivieren ferner dafür sorgt, dass der an dem physischen Objekt (115) erkannte Identifizierungscode in der Datenbank (105) dem mittels des elektronischen Geräts (120) eingegebenen Aktivierungscode zugeordnet wird.

3. Verfahren nach Anspruch 1, wobei die jedem Benutzerprofil zugeordnete Software-Anwendung (125) dafür konfiguriert ist, wahlweise den Zugriff auf den Software-Inhalt, der jedem Identifizierungscode zugeordnet ist, der dem Benutzerprofil zugeordnet ist, zu gestatten oder zu unterbinden.

4. Verfahren nach Anspruch 1, wobei jeder Identifizierungscode durch Codieren des Identifizierungscodes in einer grafischen Form und Aufbringen dieser grafischen Form auf das physische Objekt (115) in das jeweilige physische Objekt (115) eingebunden wird.

5. Verfahren nach Anspruch 4, wobei die grafische Form des Identifizierungscodes ein QR-Code ist.

6. Verfahren nach Anspruch 1, wobei das elektronische Gerät (120) ein Mobilgerät ist, das mit dem Telekommunikationsnetz verbunden ist.

7. Verfahren nach Anspruch 6, wobei das elektronische Gerät ein Smartphone ist.

8. Verfahren nach Anspruch 1, wobei die Software-Anwendung dem Benutzerprofil mittels eines Authentifizierungsvorgangs zugeordnet wird.

9. Verfahren nach Anspruch 1, wobei sich die Software-Anwendung auf einem elektronischen Gerät (120) befindet oder mittels des Telekommunikationssystems zugänglich ist.

10. Verfahren nach Anspruch 1, wobei der Software-Inhalt Daten und/oder andere Informationen umfasst.

11. Verfahren nach Anspruch 1, wobei der Software-Inhalt einen oder mehrere Software-Vorgänge beinhaltet, die automatisch ausgeführt werden, wenn dem elektronischen Gerät (120) Zugriff auf den Software-Inhalt gewährt ist.

12. Verfahren nach Anspruch 11, wobei die Software-Vorgänge das Übertragen von Informationen an andere Benutzer des Telekommunikationsnetzes umfassen.

13. Verfahren nach Anspruch 12, wobei die Informationen den geografischen Standort des elektronischen Geräts (120) beinhalten, auf dessen Software-Inhalt Zugriff gewährt wurde.

14. System (100) zum Verteilen von Software-Inhalten mittels eines Telekommunikationsnetzes, Folgendes umfassend:
- eine Datenbank (105), in der mehrere Identifizierungscodes gespeichert sind, die einzeln einem Benutzerprofil zugeordnet werden können,
- mehrere physische Objekte (115), in die jeweils einer der Identifizierungscodes eingebunden ist,
- mehrere elektronische Geräte (120), die durch das Telekommunikationsnetz mit der Datenbank verbunden sind, von denen jedes für Folgendes konfiguriert ist:
- Erkennen des Identifizierungscodes, der in eines dieser physischen Objekte (115) eingebunden ist,
- Aktivieren des an dem physischen Objekt (115) erkannten Identifizierungscodes in der Datenbank (105), wenn der Identifizierungscode in der Datenbank (105) keinem Benutzerprofil zugeordnet ist, wobei das Aktivieren dafür sorgt, dass der an dem physischen Objekt (115) erkannte Identifizierungscode in der Datenbank (105) einem Software-Inhalt und einem Benutzerprofil, das mittels des elektronischen Geräts (120) bereitgestellt wird, zugeordnet wird,
- Zugreifen auf den Software-Inhalt, der dem an dem physischen Objekt (115) erkannten Identifizierungscode zugeordnet wurde, wenn der Identifizierungscode in der Datenbank (105) einem Benutzerprofil zugeordnet ist,
- mindestens eine Software-Anwendung (125), die einem Benutzerprofil zugeordnet werden kann und die dafür konfiguriert ist, das Modifizieren nur des Software-Inhalts zu ermöglichen, der in der Datenbank (105) einem Identifizierungscode zugeordnet ist, der dem Benutzerprofil zugeordnet ist.

## Revendications

1. Procédé de diffusion de contenus logiciels au moyen d'un réseau de télécommunication, comprenant les étapes suivantes :
- le stockage, dans une base de données (105), d'une pluralité de codes d'identification pouvant être singulièrement associés à un profil d'utilisateur,
- l'intégration de chaque code d'identification dans un objet physique respectif (115),
- la détection du code d'identification intégré dans l'un de ces objets physiques (115) au moyen d'un dispositif électronique (120) connecté à la base de données (105) au moyen du réseau de télécommunication,
- l'activation dans la base de données (105) du code d'identification détecté sur l'objet physique (115), si ce code d'identification n'est associé dans la base de données (105) à aucun profil d'utilisateur,
ladite activation permettant d'associer dans la base de données (105) le code d'identification détecté sur l'objet physique (115) à un contenu logiciel et à un profil d'utilisateur fourni par l'intermédiaire du dispositif électronique (120),
- l'autorisation au dispositif électronique (120) d'accéder au contenu logiciel associé au code d'identification détecté sur l'objet physique (115), si ledit code d'identification est associé dans la base de données (105) à un profil d'utilisateur,
- l'autorisation de modifier le contenu logiciel associé dans la base de données (105) à chaque code d'identification, uniquement par l'intermédiaire d'une application logicielle (125) associée au profil d'utilisateur associé audit code d'identification.

2. Procédé selon la revendication 1, comprenant les étapes suivantes :
- le stockage dans la base de données d'une pluralité de codes d'activation pouvant être singulièrement associés à un code d'identification,
- la demande d'introduction d'un code d'activation par l'intermédiaire du dispositif électronique (120), si le code d'identification détecté sur l'objet physique (115) n'est associé dans la base de données (105) à aucun profil d'utilisateur,
- l'activation du code d'identification détecté sur l'objet physique (115) n'est effectuée que si le code d'activation introduit par l'intermédiaire du dispositif électronique (120) figure parmi ceux stockés dans la base de données (105) et n'est associé à aucun code d'identification,
ladite activation permettant en outre d'associer dans la base de données (105), le code d'identification détecté sur l'objet physique (115) au code d'activation introduit par l'intermédiaire du dispositif électronique (120).

3. Procédé selon la revendication 1, dans lequel l'application logicielle (125) associée à chaque profil d'utilisateur est configurée pour autoriser ou empêcher de manière sélective l'accès au contenu logiciel associé à chaque code d'identification associé audit profil d'utilisateur.

4. Procédé selon la revendication 1, dans lequel chaque code d'identification est intégré dans l'objet physique respectif (115) en codant le code d'identification sous une forme graphique et en appliquant cette forme graphique sur l'objet physique (115).

5. Procédé selon la revendication 4, dans lequel la forme graphique du code d'identification est un code QR.

6. Procédé selon la revendication 1, dans lequel le dispositif électronique (120) est un dispositif mobile connecté au réseau de télécommunication.

7. Procédé selon la revendication 6, dans lequel l'appareil électronique est un téléphone intelligent.

8. Procédé selon la revendication 1, dans lequel l'application logicielle est associée au profil d'utilisateur par une procédure d'authentification.

9. Procédé selon la revendication 1, dans lequel l'application logicielle réside dans un dispositif électronique (120) ou est accessible par l'intermédiaire du système de télécommunication.

10. Procédé selon la revendication 1, dans lequel le contenu logiciel comprend des données et/ou des informations.

11. Procédé selon la revendication 1, dans lequel le contenu logiciel comprend une ou plusieurs procédures logicielles qui sont automatiquement exécutées lorsque le dispositif électronique (120) a accès au contenu logiciel.

12. Procédé selon la revendication 11, dans lequel lesdites procédures logicielles comprennent la transmission d'informations à d'autres utilisateurs du réseau de télécommunication.

13. Procédé selon la revendication 12, dans lequel ledites informations comprennent l'emplacement géographique du dispositif électronique (120) auquel le contenu logiciel a été donné accès.

14. Système (100) de diffusion de contenus logiciels au moyen d'un réseau de télécommunication comprenant :
- une base de données (105) dans laquelle une pluralité de codes d'identification pouvant être singulièrement associés à un profil d'utilisateur est stockée,
- une pluralité d'objets physiques (115) dans chacun desquels un desdits codes d'identification est intégré,
- une pluralité de dispositifs électroniques (120) connectés à la base de données au moyen du réseau de télécommunication, chacun d'entre eux étant configuré pour :
- détecter le code d'identification intégré dans l'un des objets physiques (115),
- activer dans la base de données le code d'identification détecté sur l'objet physique (115), si ledit code d'identification n'est associé dans la base de données (105) à aucun profil d'utilisateur, ladite activation permettant d'associer dans la base de données (105) le code d'identification détecté sur l'objet physique (115) à un contenu logiciel et à un profil d'utilisateur fourni par l'intermédiaire du dispositif électronique (120),
- accéder au contenu logiciel associé au code d'identification détecté sur l'objet physique (115), si ledit code d'identification est associé dans la base de données (105) à un profil d'utilisateur,
- au moins une application logicielle (125) associable à un profil d'utilisateur et configurée pour permettre de modifier uniquement le contenu logiciel associé dans la base de données (105) à un code d'identification associé audit profil d'utilisateur.
